# EUROPEAN PATENT SPECIFICATION

(11) **EP 1 770 547 B1**
(45) Date of publication and mention of the grant of the patent: **12.09.2012**
(21) Application number: 07000674.7
(22) Date of filing: 12.06.2002
(51) Int. Cl.: G06F 17/21

(54) **Data processing method, data processing program, and data processing apparatus**
Datenverarbeitungsverfahren, Datenverarbeitungprogramm und Datenverarbeitungsvorrichtung
Procédé de traitement de données, programme de traitement de données et appareil de traitement de données

(30) Priority: 14.06.2001 JP 2001179415
(43) Date of publication of application: 04.04.2007
(62) Divisional of application: 02738675.4
(73) Proprietor: Sharp Kabushiki Kaisha, Osaka-shi, Osaka 545-8522 (JP)
(72) Inventor: Sawada, Yuji, Nara-shi, Nara 630-8305 (JP)
(74) Representative: Treeby, Philip David William

(56) References cited:
- GB-A- 2 357 348
- US-A- 4 912 669
- US-A- 4 996 665
- C.-C. KANNE, G. MOERKOTTE: "Efficient storage of XML data" 1999, , PROC. OF ICDE, CALIFORNIA, USA , XP002359294 * abstract * * page 1, lines 1-4 * * page 3, lines 2-11 * * sequence 3.2.2 *

## Description

### Technical Field

The present invention relates generally to data processing methods programs and apparatuses, structured data, computer readable recording media having the structured data recorded therein, and transmission devices, and particularly to data processing methods programs and apparatuses, structured data, computer readable recording media having the structured data recorded therein, and transmission devices capable of processing hierarchically structured electronic data.

### Background Art

As structured electronic data causing a prescribed process to be executed in accordance with a definition of a document description language that is a data format for recording a structured document having a hierarchical structure, Standard Generalized Markup Language (SGML), Extensible Markup Language (XML) and the like are known. In particular, XML is actively used for example for electronic documents, electronic data and the like exchanged on the Internet.

As a method of processing that handles XML electronic data, there exist the Document Object Model (DOM) format and the Simple API for XML (SAX) format.

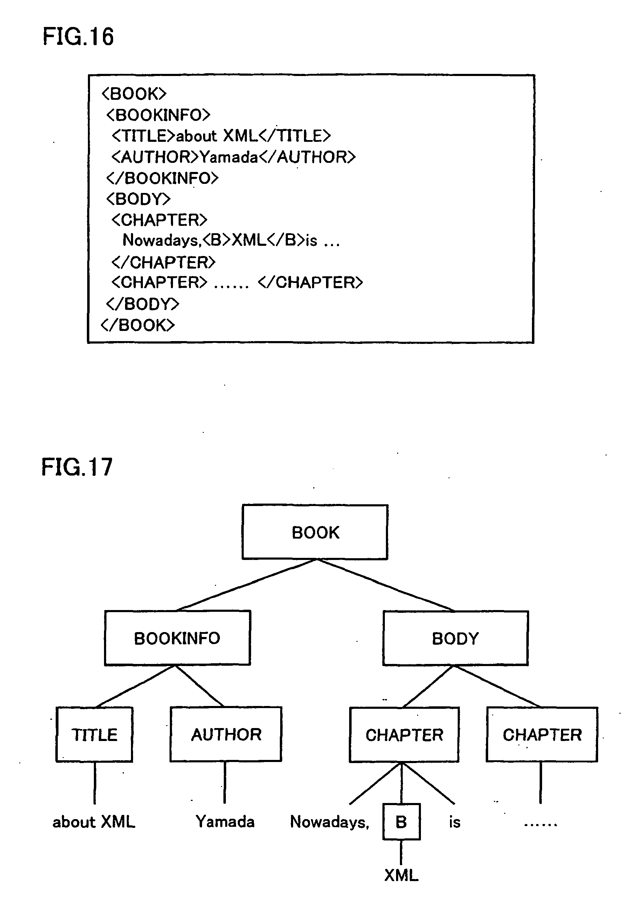

The DOM format is a method of processing that reads all of electronic data of the interest and comprehends a hierarchical structure of each and every element in the electronic data and then accesses each element of the electronic data. For example, if there exists electronic data having such a hierarchical structure as shown in Fig. 16, the entirety of the electronic data is first read and all elements' hierarchical structures are analyzed. Fig. 16 only shows the electronic data's hierarchical structure and does not show text or content. From the electronic data having the Fig. 16 hierarchical structure a tree structure such as shown in Fig. 17 is created and then each element (title, author and the like) is accessed. Thus in the DOM electronic data processing method electronic data's hierarchical structure is first comprehended and the data is then processed. The method is thus characterized in that any element is readily accessed.

By contrast, the SAX format is a method of processing that reads electronic data from the top successively, provides structural analysis only for a read element(s) and processed the same. This method can process electronic data successively without awaiting a process of analyzing the entire electronic data and provides reduced overhead in processing speed and memory capacity advantageously.

While both the DOM and SAX formats have their respective advantages, they also have their respective disadvantages.

More specifically, for the DOM format, if processing only a portion of electronic data is desired, the entirety of the electronic data must be structurally analyzed to generate a tree structure, which requires extra processing. The DOM format is also disadvantageous in that if electronic data has a large size, an increased processing time is required to create the data's tree structure and an increased amount of memory is required to store the tree structure.

By contrast, the SAX format is an access format based on processing electronic data from the top successively. Accordingly, if electronic data's content is not processed from the top successively and a desired element is handled in a desired order, extra reading and structural analysis processes would be introduced. Furthermore, when an element of the latter half of electronic data is processed, the electronic data must be read from the top and structurally analyzed, which requires an extra processing time.

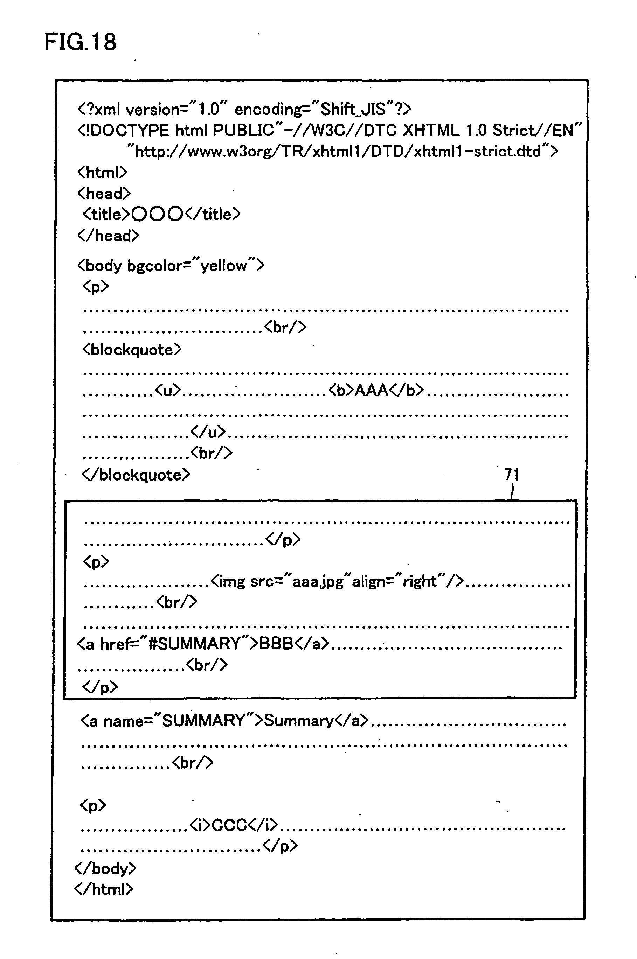

In contrast, there is also a method of processing other than the DOM and SAX formats. This method extracts only a desired element without analyzing a hierarchical structure. With this method, however, the extracted element cannot appropriately be processed, since the element under which a desired area to be extracted is included may affect the element's meaning, a position for display, a size, an attribute and the like, changing them. For example, with reference to Fig. 18, which shows an exemplary, hierarchically structured, Extensible Hypertext Markup Language (XHTML) document, a top portion of an area 71 is sandwiched by <html>, <body bgcolor= "yellow">, <p>. Of these, <body bgcolor= "yellow"> indicates that the area sandwiched by tags is text data and also means that the text's background is set yellow. Whether these tags exist or not determines whether the text's background will be yellow or white (a default value). As such, if an attempt is made to read only area 71 from the file and perform a process to display the same, the information that the text's background is yellow cannot be obtained and an appropriate display process cannot be performed.

Thus in general for hierarchically structured electronic data if an attempt is made to read only a desired area to be processed and process the area, it cannot accurately be processed as control information (a tag, an attribute and the like) written in an area other than that to be processed cannot be obtained.

Accordingly the present invention contemplates a data processing method, program and apparatus, structured data, computer readable recording medium having the structured data recorded therein, and transmission device.

US4912669 discloses a document editing system for storing a plurality of format data records in a tree structure which define the format of a document. The format data records comprise any combination of a title field, a basic field, and a group field. A document data management section, in response to a document preparation request from a work station, prepares a basic document having a tree structure consistent with the document format data records. Furthermore, the document data management section updates the basic document with externally input data to prepare a target document. The document data management section determines the number of lines and characters per line of a group field including a line/character increase or decrease field, from a tree structure subordinate to the group field.

### Disclosure of the Invention

The present invention resolves the above disadvantage by providing a structured data as described in claim 1.

### Brief Description of the Drawings

In the drawings :
Fig. 1 is a block diagram of a data processing apparatus 100 of the present invention in a first example;
Fig. 2 is an overview of a display device of the present invention in the first example, as specifically implemented exemplarily by mobile equipment;
Fig. 3 shows a specific outline of sub block data in the present example;
Fig. 4 specifically shows electronic data divided into a plurality of blocks;
Fig. 5 shows a specific example of sub block data set for the Fig. 4 electronic data;
Fig. 6 is a flow chart representing a process performed by data processing apparatus 100 of the present invention in the first example;
Fig. 7 shows a specific example of data created from one block of data and sub block data;
Fig. 8 shows a specific example of electronic structure which does not have a completely hierarchical structure;
Fig. 9 is a block diagram of a data processing apparatus 200 of the present invention in a second example;
Fig. 10 is a flow chart illustrating a process performed by data processing apparatus 200 of the present invention in the second example;
Fig. 11 is a flow chart representing a process in the second example that is performed to create sub block data;
Figs. 12A-12C show a specific example of data divided in the middle of a line into blocks and a specific example of indication;
Fig. 13 is a block diagram of the data processing apparatus of the present invention in a third example;
Fig. 14 is a flow chart representing a process in the third example that is performed to create sub block data;
Fig. 15 is a block diagram of the data processing apparatus of the present invention in the third example;
Fig. 16 shows a specific example of hierarchically structured electronic data;
Fig. 17 is a view for illustrating a tree structure extracted from hierarchically structured electronic data; and
Fig. 18 shows a specific example of hierarchically structured electronic data.

### Best Mode for Carrying Out the Invention

The present invention will now be more specifically described with reference to the accompanying drawings.

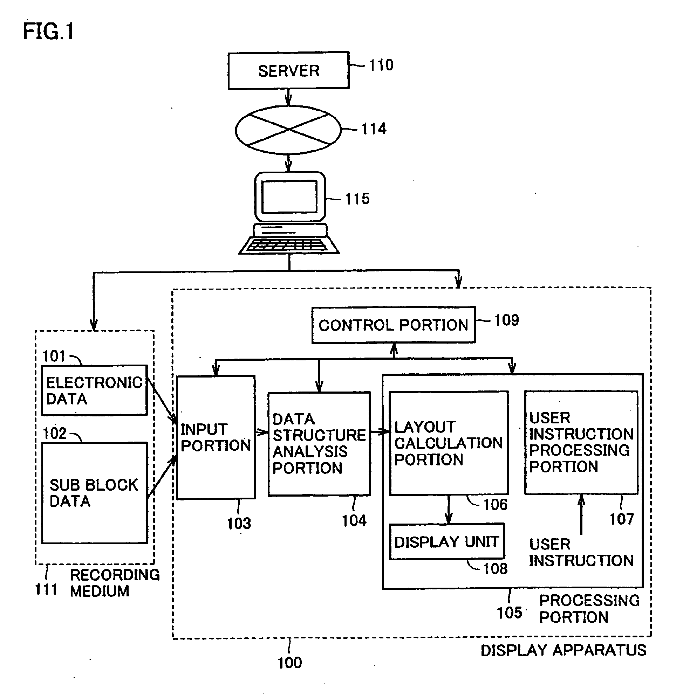

Fig. 1 is an exemplary block diagram of a data processing apparatus 100 in a first example that is a display device.

With reference to Fig. 1, a server 110 receives a request from a user and transmits electronic data recorded in a database. A network 114 connects server 110 and the user's personal computer (PC) 115 together. A recording medium 111 extracts electronic data from PC 115 and supplies data processing apparatus 100 with the electronic data.

Note that PC 115 may be replaced with an electronic data reception apparatus (not shown) installed for example in convenience stores, railway station premises and the like, and from the apparatus electronic data may be extracted and recorded in recording medium 111. In extracting the electronic data from the apparatus and recording the data in recording medium 111, the service can be charged for. Alternatively, electronic data transmitted from server 110 may be received by data processing apparatus 100 and recorded in recording medium 111 without passing through PC 115.

Further referring to Fig. 1, electronic data 101 is electronic data recorded in recording medium 111 and sub block data 102 is data recorded in recording medium 111 and accompanying electronic data 101.

Electronic data 101 described above is structured electronic data for causing a prescribed process to be executed in accordance with a definition of a document description language and is recorded using a data format for recording a structured document having a hierarchical structure, such as SGML and XML.

Sub block data 102 is data dividing structured electronic data 101 into a plurality of blocks and causing a prescribed process to be executed for each block. Sub block data 102 is paired with electronic data 101.

Further referring to Fig. 1, an input portion 103 reads electronic data 101 and sub block data 102. From electronic data 101 and sub block data 102 a data structure analysis portion 104 analyzes data's hierarchical structure. A processing portion 105 performs a prescribed process based on the hierarchical structure analyzed by data structure analysis portion 104. A control portion 109 controls input portion 103, data structure analysis portion 104, and processing portion 105.

Processing portion 105 can have different configurations for different contents of electronic data and different process. If data processing apparatus 100 is for example a display device displaying text such as electronic documents and electronic data exchanged on the Internet, books, textbooks, magazines, novels, and articles, then, as shown in Fig. 1, processing portion 105 is configured of a layout calculation portion 106 using a resultant analysis provided by data structure analysis portion 104 to calculate a layout used to display the text, a display unit 108 using the calculated layout to display the text, and a user instruction processing portion 107 processing user instructions such as scrolling.

If the electronic data is voice, processing portion 105 is modified to be a reading device. Furthermore, for display unit 108, an audio reproduction unit is used, and layout calculation portion 106 is modified to be a portion that determines which portion to be read or not and which portion to be stressed or not when it is read and that also introduces an interval between each reading. When the electronic data is voice, the data's hierarchical structure may be considered in changing the voice's attribute in reading. Furthermore, if the electronic data is voice, data processing apparatus 100 requires a scenario interpretation portion, an audio output portion, and a synchronization portion synchronizing each element to control an order of reproduction.

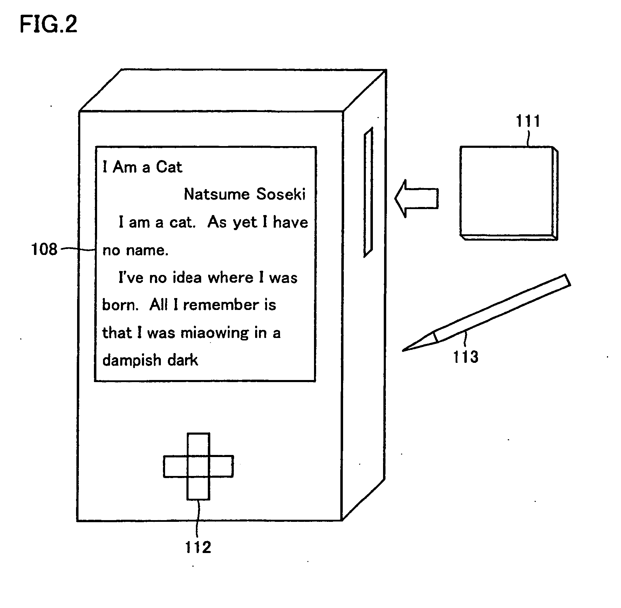

Fig. 2 specifically shows an example provided when data processing apparatus 100 is implemented by mobile equipment.

In Fig. 2, display unit 108 provides an indication based on a layout for display that has been calculated by layout calculation portion 106. Display unit 108 is configured for example of a display. Furthermore, recording medium 111 is, as has been shown in Fig. 1, a recording medium having recorded therein electronic data 101 to be processed and sub block data 102 extracted by PC 115, an electronic data reception apparatus or the like via server 110 and network 114 from a document database. When recording medium 111 is inserted into the body of data processing apparatus 100, the two data are read through input portion 103 provided in data processing apparatus 200 corresponding to a display device. Furthermore a cross key 112 is used by a user for example to scroll text and select a book, a document or the like to be displayed. Furthermore, when electric data includes a link function, a pen 113 is used to jump to a link destination. The pen is also used to change an item that the display device or data processing apparatus 100 requests the user to confirm.

Note that rather than recording medium 111 having electronic data 101 and sub block data 102 recorded therein, data processing apparatus 100 may internally be provided with a region for recording the data therein. Alternatively, the two data may be recorded in server 110 on network 114 or a database and processed while the data are downloaded.

The sub block data will now be described.

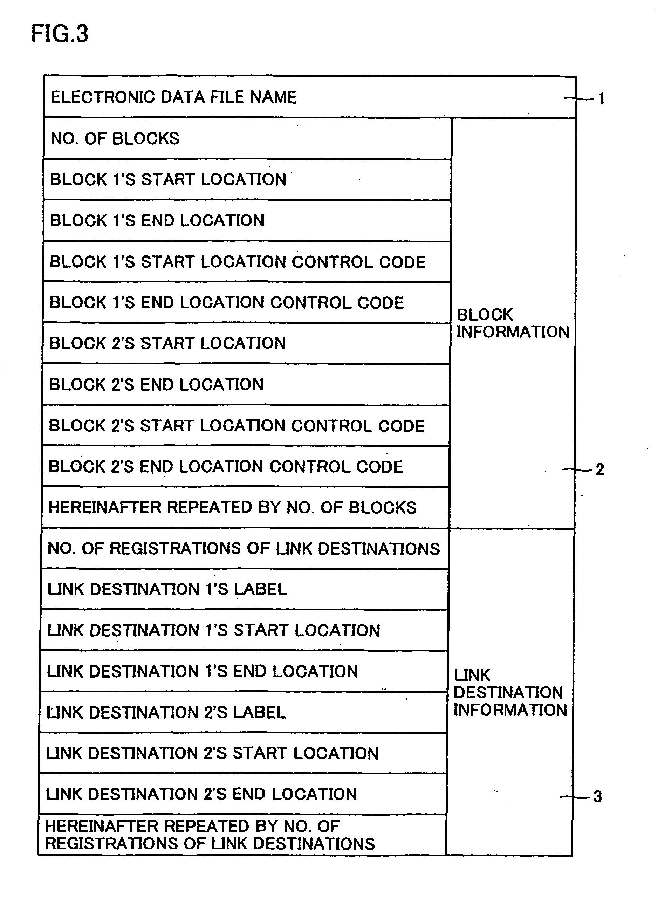

Generally, the sub block data is configured of the three data areas of an electronic data file name 1, block information 2 and link destination information 3, as shown in Fig. 3.

Electronic data file name 1 is an area prepared to record to which electronic data the sub block data corresponds. If the sub block data is recorded within electronic data or linked thereto and thus recorded, the electronic data file name 1 area may be dispensed with.

Furthermore, for some electronic data to be processed, the link destination information 3 area may be absent.

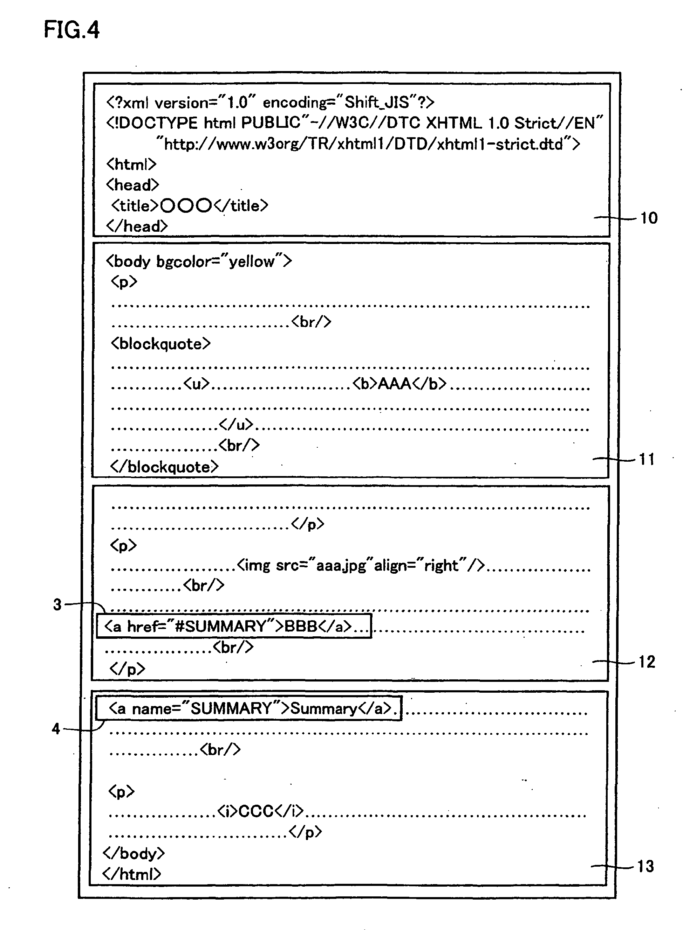

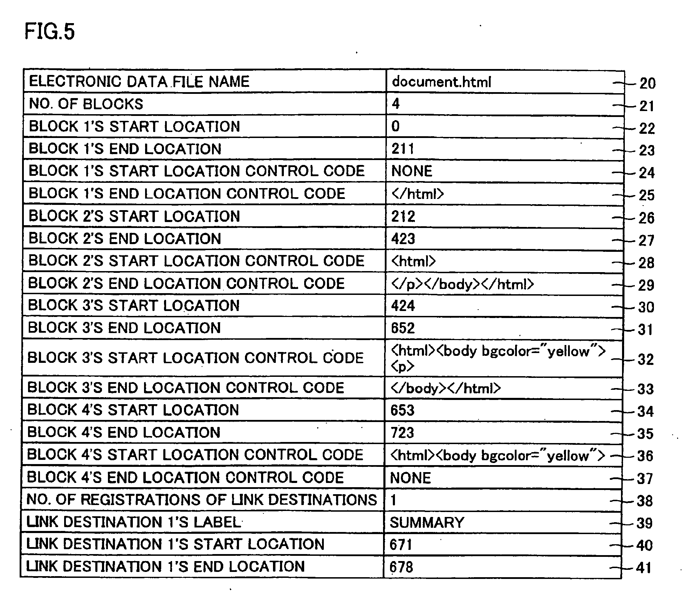

Hereinafter the three area's format will be described by referring to an XHTML document as a specific example of electronic data described in accordance with a definition of a document description language and having a hierarchical structure. If the XHTML document shown in Fig. 18 is divided into four blocks (10-13), as shown in Fig. 4, the sub block data that corresponds to this XHTML document will be as shown in Fig. 5.

With reference to Fig. 5, the sub block data has an area 20 serving as the electronic data file name 1 area having the Fig. 4 XHMTL document's file name recorded therein.

The sub block data has areas 21-37 serving as the block information 2 area.

Area 21 records a block count. As the document is divided into four blocks, this area records 4.

Areas 22-25, 26-29, 30-33, 34-37 are areas of block information for blocks 10, 11, 12, 13, respectively. In general for division into n blocks the structure of the block information of areas 21-25 is repeated n times and thus recorded.

Areas 22, 26, 30, 34 record their respective blocks' start locations and areas 23, 27, 31, 35 record their respective blocks' end locations, in the form of a byte count from the file's top. If the data belonging to block 11 is to be extracted, the values of the block information of areas 26 and 27 are checked and the 212th through 423rd bites as counted from the file's top are read.

Areas 24, 28, 32, 36 each records a start tag which is still effective at the corresponding block's start location. The area 24 block information is a start tag which is still effective at the block 10 start location. However, as block 10 starts at the file's top, there does not exist a control code recorded in area 24. At the block 11 start location, <html> is not closed, and area 28 thus records <html>. For the block 12 start location, at which a plurality of tags (<html>, <body bgcolor="yellow">, <p>) are not closed, they are linked in the order of appearance, i.e., <html><body bgcolor="yellow"><p> to record block information in area 32. Note that when a tag has an attribute, such as the <body> tag having an attribute (bgcolor="yellow"), the tag is recorded with the attribute attached thereto. For block 13, <html><body bgcolor="yellow"> are also recorded in area 36 as block information.

Areas 25, 29, 33, 37 each records an end tag of a tag which has not been closed at the corresponding block's end location. At the block 10 end location the <html> tag is still effective, and area 25 records block information </html>. Furthermore, at the block 11 end location the <html>, <body bgcolor="yellow">, <p> tags are not closed, and accordingly in an order reverse to the order of their appearance the above end tags are linked to be </p></body></html> and the block information is recorded in area 29. Similarly for block 12 block information </body></html> is recorded. At the block 13 end location all tags are closed, and area 37 records nothing.

Areas 38-41 are areas of link destination information 3, and of the Fig. 18 XHTML document, a position of a label designated as a link destination is recorded.

The linking of an XHMTL document will now be briefly described. For an XHMTL document, an <a> tag can be used to provide a link to a different file or a portion of a file. For example, in Fig. 4, link destination information 3, 4 are examples of establishing a link to a portion of the same file. In this example when a character string "BBB" in link destination information 3 surrounded by <a> tags is clicked the location for display jumps to a location at which a label "SUMMARY" designated by a *href* attribute is set, i.e., link destination information 4 with "SUMMARY" set at <a>'s *name* attribute.

In Fig. 5, areas 38-41 each records positional information of a label of a link destination, i.e., positional information of a label set by the <a> tag's *name* attribute. For the Fig. 4 XHMTL document, there is only a single <a> tag that has the *name* attribute and accordingly area 38 records 1 and the combination of areas 39-41 is recorded only once.

In general if there are n <a> tags having the *name* attribute the link destination information of the structure of areas 39-41 is repeated n times. Area 39 records a label name recorded at an <a> tag's *name* attribute, and areas 40, 41 record start an end locations, respectively, of a character string sandwiched by <a> tag, in the form of a byte count from the file's top.

Note that a block has a size determined by the apparatus's processing capability. In other words, a larger block necessitates an increased amount of processing per block and hence increased time and increased memory and resource capacities to be used. As such, desirably, the block's size is determined by the apparatus's processing capability. A factor to determine the apparatus' processing capability includes the processing capability of a central processing unit (CPU) mounted in the apparatus, memory capacity, resource capacity, and the like.

On the other hand, the block's size is also determined by the number of characters displayed on a screen and a factor which determines it. For example, an apparatus displaying text for example of an electronic book is often designed so that after it displays one screen of text it waits until a user instruction to move page is received. If in that case the block has a size set to be extremely large relative to the number of characters displayed on a screen, the method for processing in the present embodiment, which reads a block as a single unit, will also read data unnecessary as it is not displayed on a screen, which is useless. As such, desirably, a block size is determined by the number of characters displayed on a screen. Note that the number of characters displayed on a screen varies with the size and resolution of a screen of the display device, the font of the character(s) to be displayed, line and character spacings, margin size, and the like, and by these factors the block size may be changed.

The sub block data varies slightly in structure and format depending on the type of electronic data of interest. In general, for XML electronic data, link destination information 3 of Fig. 3 is excluded and the electronic data file name 1 and block information 2 areas exist and are also identical in format. As link destination information 3 is information for a link function, a function of an XHTML document, the information may be absent for electronic data other than an electronic book such as an XHMTL document. For electronic data causing a process to proceed with reference to data in a different block and electronic data having a function responsive to the user's operation to display or reproduce data in a different block, however, the location of the data may be recorded as link destination information 3 to facilitate access.

Applicable electronic data is not limited to the XML format. In general, the method for processing in the present example the method for processing in the present example applicable to any structured documents having a hierarchical structure. In this case, more specifically, a record is made at the block information 2 start/end location control code such that a hierarchical structure at a block's start/end location can be understood, in their respective formats.

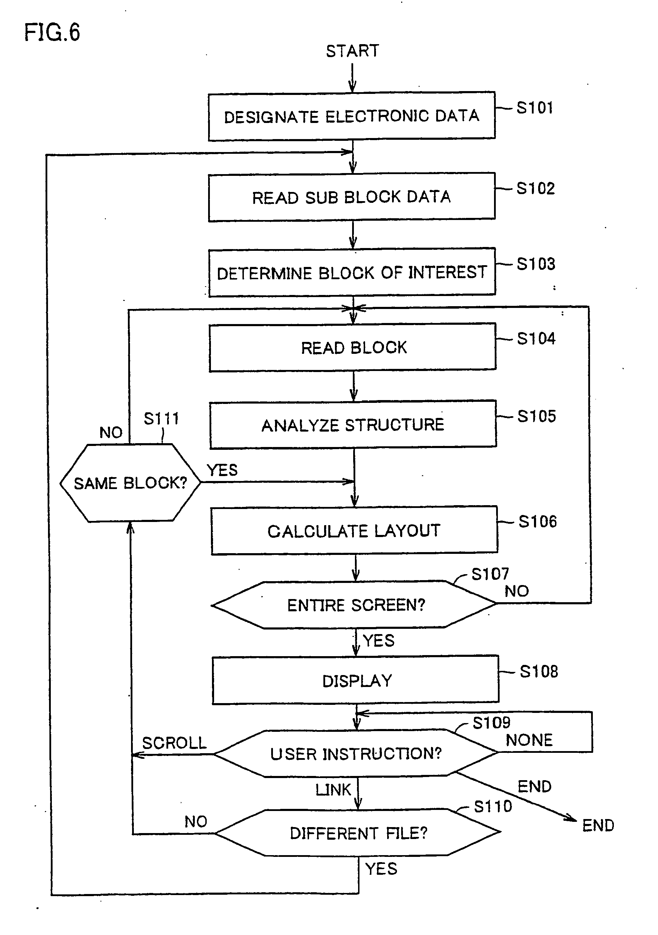

The operation of processing apparatus 100 using electronic data and sub block data allow data will now be described hereinafter with a display device as an example. Fig. 6 represents a flow chart for the display device.

With reference to Fig. 6, initially via user instruction processing portion 107 a user designates electronic data to be displayed (step (S)101) and sub block data prepared for the electronic data is read via input portion 103 (S102).

Then, of the sub block data read at S102, each block's start/end location, and a location of an area to be displayed on a screen, as seen from the file's top, are referred to to determine which block to be read (S103), and only a necessary block is read via input portion 103 (S104).

Then with reference to the contents of the sub block data read at step S102 the read block's start/end location control code is examined. Then a start location control code, block data, and an end location control code are linked in this order and a hierarchical structure is analyzed to create a tree structure (S105).

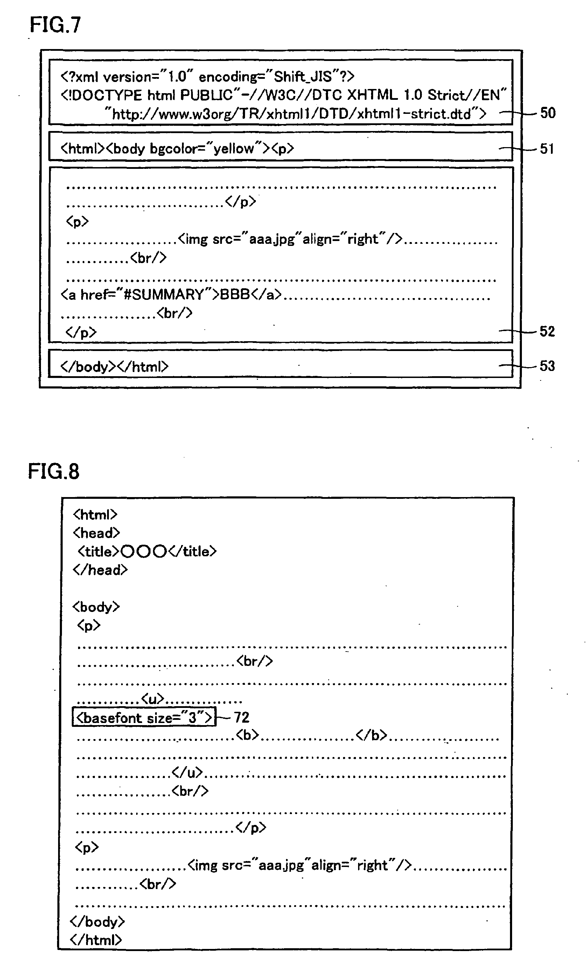

For example if the Fig. 4 block 12 is read, the block information in the Fig. 5 sub block data at an area 32 and that in the data at an area 33 are linked together, one ahead and the other behind, to create data, as shown in Fig. 7, and analyze a hierarchical structure. In Fig. 7, the area 51 data is a control code recorded in the block information of area 32, the area 52 data is data of block 12 read at S104, and area 53 is a control code recorded in area 33. Note that, as shown in Fig. 7, if necessary, the top may have attached thereto an XML declaration and a documentary declaration, such as the data of area 50. Step 105 is performed at data structure analysis portion 104.

Then layout calculation portion 160 uses the tree structure for a single block that has been created at S105 to calculate a layout used in a screen for display (S 106). If as a result a layout of the entirety of a screen for display that display unit 108 has is determined (S107) the control proceeds with S108 to display the designated electronic data on display unit 108.

If at S107 the screen for display still has an area for which no layout is determined, the control returns to S 104, and a subsequent block is read and a tree structure is created (S105), and the current block's layout process is performed as continued from a layout screen obtained for the immediately preceding block (S106). Subsequent steps 107 and 108 are similar to those previously described.

After at S 108 display unit 108 displays the data, the control goes to S109 and waits for the user's instructions. Until the user's instruction is received, the control awaits at S109.

If a user instruction is received to terminate the process for display, the control terminates the process.

If at S109 a user instruction is received to scroll to a subsequent page or a previous page, the control proceeds with S111 and determines as a result of the user's scroll instruction whether content to be subsequently displayed is identical to the current block. If so then the control moves to S106 and performs a layout process based on the previously created tree structure and, similarly as has been described previously, S107 and the subsequent steps continue.

If at S111 the control determines that the content to be subsequently displayed differs from the current block, the control proceeds with S104, and reads a block necessary for display, and similarly as has been described previously, continues S105 and the subsequent steps.

If at S 109 an instruction is received to for example employ a link jump to jump to a different area, the control proceeds with S110 and determines whether the link is destined for a different file or the same file. For example for an XHMTL document when a character string sandwiched by <a> tags having the *href* attribute is clicked, from the attribute's value whether the link is that to a different file or within the same file is determined. If it is a link within the same file, then the control proceeds with S111 and determines whether the link destination is identical to the current block. In doing so, link destination information 3 recorded in sub block data is referred to to determine in which block the link destination is included. For example for the Fig. 5 example the areas 38-41 block information is referred to to determine at which location in the file a label of the link destination designated by <a>'s *href* attribute is present. Thereafter the areas 21-37 block information is referred to to examine which block includes the location to examine the link destination's block.

If the obtained link destination's block is identical to the current block, the control proceeds with S 106 and performs a process similar to that previously described.

If the link destination's block is different from the current block, then the control proceeds with S104, and reads the different block and performs a process similar to that previously described.

If at S110 the control determines that the link destination is a different file, then the control proceeds with S102, and reads sub block data prepared for the link destination's file and performs a process similar to that previously described.

Using sub block data as described above for processing allows only a portion of electronic data to be read and processed so that it can be processed fast and with reduced memory.

Note that while the present example has some portions described by referring to an XHTML document as an example, it is apparent from the above description that its application is not limited to a device displaying an XHTML document. For devices displaying electronic data having a link functions such as an XHMTL document and hierarchically structured, the Fig. 3 sub block data and the Fig. 6 flow chart are applicable. Furthermore, even if electronic data is free of a link function, Fig. 3 without link destination information 3 and Fig. 6 without S110 are applicable. For example, JepaX (JEPA electronic publishing exchange format) promoted by Japan Electronic Publishing Association for standardization, Network Electronic Book Format proposed by Japan Electronic Book Committee, and any other similar electronic data having a hierarchical structure recorded for example by XML can be processed similarly as shown in Fig. 6.

Furthermore the present invention is characterized in that preparing sub block data allows hierarchically structured electronic data to be only partially read and processed. As such in the Fig. 1 block diagram by replacing processing portion 105 with a process unique to the processing apparatus, the present invention can be applied not only to a display device but also different processing apparatuses. In that case, the Fig. 6 flow chart has steps 106-108 replaced by a process unique to the processing apparatus of interest. For example for a text reading apparatus the steps are replaced with the steps of determining whether which portion of electronic data to be read or not, setting sound quality and intensity depending on the portion of interest to read it, and reproducing a voice.

While in the present example the present invention has been described by referring to electronic data having a hierarchical structure such as XML, the present invention is also applicable to a HTML document or similar data that does not completely have a hierarchical structure.

For example for a HTML document there is a tag <basefont>, which designates a basefont size. When a designation is made as shown in Fig. 8 at an area 72, a basefont size of 3 is set, however hierarchically the subsequent text may be structured, until a subsequent <basefont> tag designation arrives. For example, while the <basefont> indicated in area 72 is sandwiched for example by <p> and <u> tags, despite that <p> and <u>'s end tags appear the setting is still held and accordingly the hierarchical structure is broken. If there exists such a tag having an effect maintained ignoring a hierarchical structure, then at an end location control code of the block that includes that tag the tag's end tag can also be recorded and for a subsequent block the tag can also be added to a start location control code and the tag's end tag to an end location control code so that if a different block alone is to be processed it can be understood the tag has effect on the block. As such, a process similar to Fig. 6 can be provided.

### Second Example

The present invention in a second example will now be described.

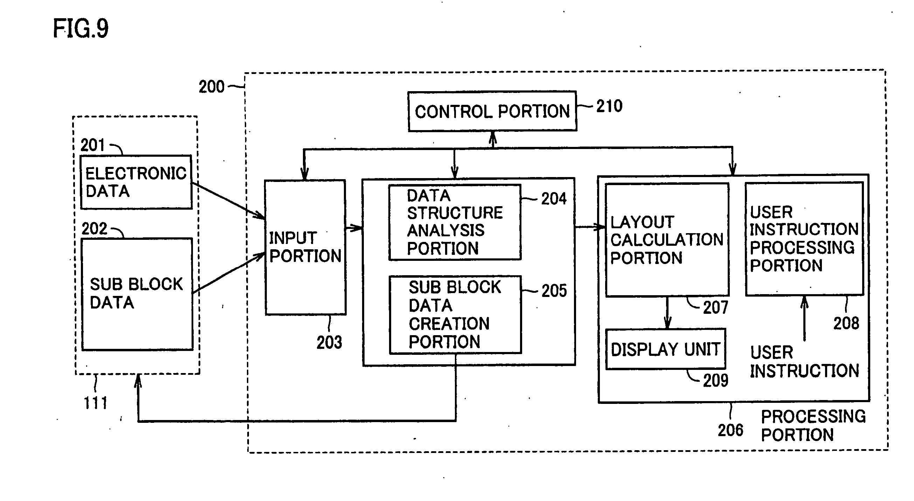

Fig. 9 is an exemplary block diagram of a data processing apparatus 200 of the present invention in the second example.

With reference to Fig. 9, electronic data 201 is electronic data processed by data processing apparatus 200, and sub block data 202 is sub block data accompanying electronic data 201.

An input portion 203 reads electronic data 201 and sub block data 202. From electronic data 201 and sub block data 202 a data structure analysis portion 204 analyzes data's hierarchical structure. A sub block data creation portion 205 creates sub block data from electronic data 201 when sub block data 202 does not exist. A processing portion 206 performs a prescribed process based on the hierarchical structure analyzed by data structure analysis portion 204. A control portion 210 controls input portion 203, data structure analysis portion 204, sub block data creation portion 205, and processing portion 206. Electronic data 201 and sub block data 202 are recorded in recording medium 111, similarly as has been described in the first example, and read into data processing apparatus 200.

Processing portion 206 can have different configurations for different contents of electronic data and different process. If data processing apparatus 200 is for example a display device for example displaying text, then, as shown in Fig. 9, processing portion 206 is configured of a layout calculation portion 207 using a resultant analysis provided by data structure analysis portion 204 to calculate a layout used to display the text, a display unit 209 using the calculated layout for display, and a user instruction processing portion 208 processing user instructions such as scrolling.

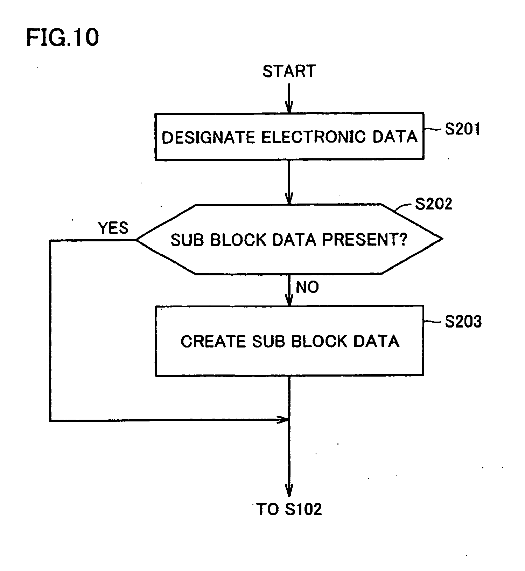

Fig. 10 represents a process in processing apparatus 200 in a flow chart.

With reference to Fig. 10, initially a user uses a keyboard, a mouse, a pen and/or the like to designate electronic data to be processed (S201). Via user instruction processing portion 208 at S202 a decision is made as to whether for the electronic data there exists sub block data. If so then a process similar to that described in the first example is performed and the Fig. 6 step 102 and the subsequent steps are performed.

Otherwise, then at S203 sub block data is created and subsequently the Fig. 6 S102 and the subsequent steps are performed. S102 and the subsequent steps are identical to those described in the first example. S203 will now be described more specifically.

Sub block data creation portion 205 divides electronic data received from input portion 202 into a plurality of blocks, examines a control code at each block's start/end location, and creates sub block data as shown in Fig. 3.

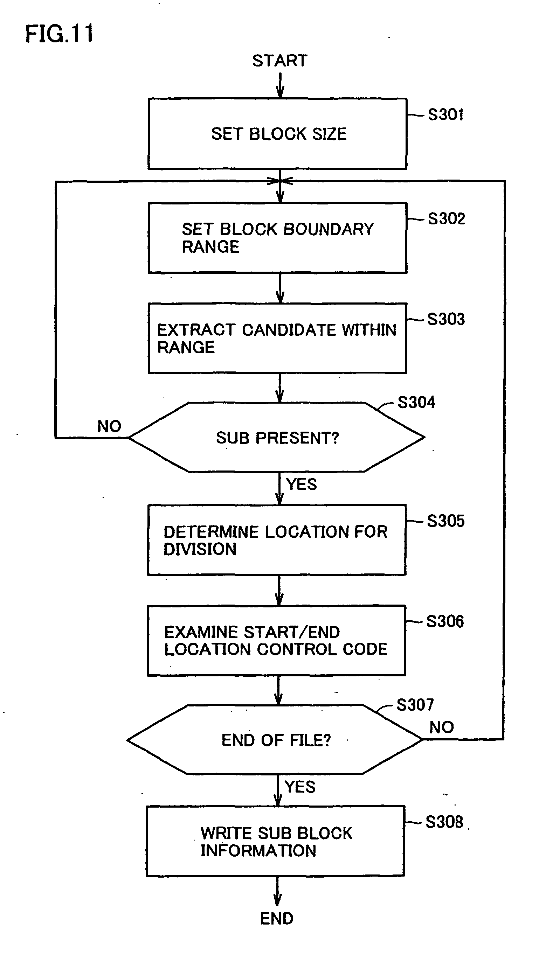

At S203, a process is performed, as shown in the flow chart of Fig. 11.

With reference to Fig. 11, initially a block size target value T is set (S301). As has been described previously, desirably an appropriate block size is determined by the processing apparatus's processing capability, the number of characters displayed on a screen, and factors that determine the same. Accordingly these parameters are referred to to set block size target value T. Note that in setting value T, a default value previously provided to the processing apparatus of interest or a user designated value may be used.

The Fig. 5 sub block data is created with a block size target value set at 200 bytes. It should be noted herein that a block size to be set is a target value because in general, data can be divided into blocks only at a limited location, as will be described hereinafter when S303 is described.

At S301 once block size target value T has been set, the control proceeds with S302 and an area of X bytes including a Tth byte as counted from the file's top is set as a block boundary search range. The value of X is set for example to a half of value T. Then at S303 within the search range a candidate boundary is extracted.

A candidate boundary varies depending on the type of electronic data of interest. For example if electronic data is an XML document, it is not separated in the middle of a tag, a comment or a character string but immediately before or after a tag. For example if there is a data string "<divid="ID1">abcdef</div>", a block boundary is set immediately before or after "<div id="ID1">" or immediately before or after "</div>". Separation is not introduced in the middle of a tag because separation in the middle of "<div id="ID1">" may interrupt a tag name, an attribute name, an attribute value and the like, and separation is not introduced in the character string element "abcdef' because a character string, text and the like sandwiched between tags often by themselves form a character string, text and the like that each have a meaning and desirably, dividing in the middle a character string, text and the like that each have a meaning should be avoided.

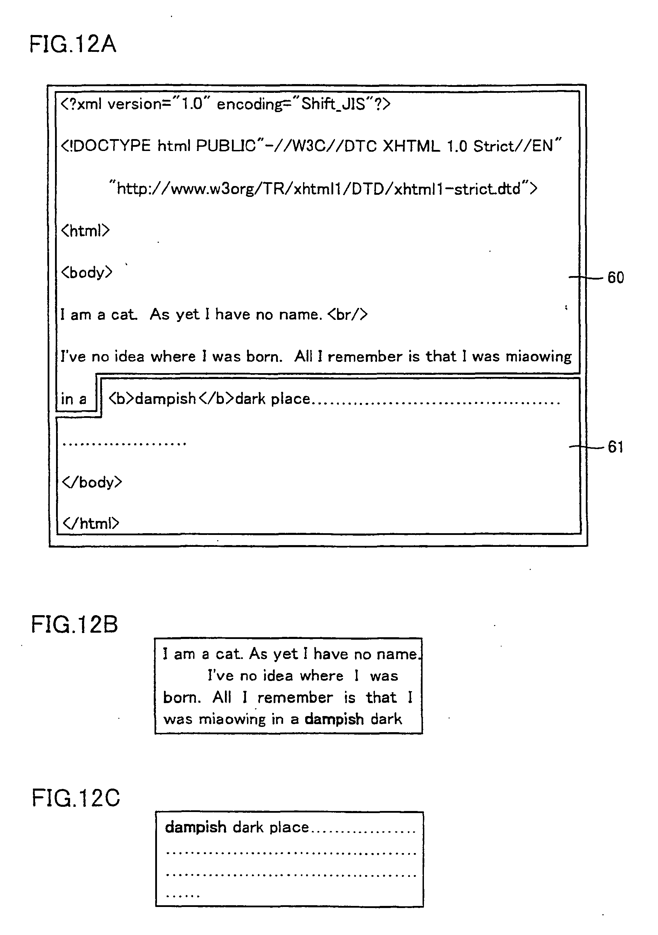

Furthermore, if data processing apparatus 200 is a display device displaying an electronic book such as an XHTML document, then in addition to the above described restriction it is desirable that a location immediately after a newline tag, a paragraph's top, or a similar location at which an indication starts from the beginning of a line be set as candidate boundaries. For example, Fig. 12A shows a specific example of an XHTML document divided in the middle of a line into two blocks 60 and 61 and Fig. 12B shows an example of displaying the XHTML document from the top.

If block 60 ends in the middle of a line, block 61 will be laid out from the middle of the line (from the third line at the seventh character et seq). On the other hand, when a user or the like issues an instruction to start an indication from the top of block 61, block 61 alone is read and a layout calculation is performed. Accordingly, as shown in Fig. 12C, block 61 is displayed from the top of a line. As such, if the user issues an instruction to scroll from block 61 to block 60 or in a direction opposite to that of the text, with indication of block 61 starting at different locations as shown in Figs. 12B and 12C, an indication out of order would be provided when blocks are switched.

If block division is limited to a location at which an indication starts from the beginning of a line, a layout is provided constantly from the beginning of a line regardless of an immediate preceding block's layout. This can eliminate such a problem as described above. Accordingly, for an electronic book such as an XHTML document, a block's candidate boundary is extracted from a location that immediately precedes or follows a tag and also allows an indication to start constantly the beginning of a line.

Then the number of candidate boundaries extracted at S303 is referred to to branch a condition at S304.

If no candidate boundary is found then the control proceeds with S302 and shifts the search range in the file downwards and, similarly as has been described previously, S302 and the subsequent steps are performed.

If there exists a candidate boundary, a candidate closest to a center of the search range set at S302 is selected and set as a boundary (S305). Then at S306 a block's start/end location's positional and hierarchical relationship as seen from the file's top is examined to obtain a single block of information to be recorded in block information 2.

Then whether this block's end is the file's end is determined (S308). If not then the control proceeds with S302 and continues an examination of a subsequent block.

If the block's end matches the file's end then at S308 the block information and electronic data's file name examined from S301 through S307 are recorded in sub block data. If necessary, link destination information is also examined and recorded in the sub block data. When S308 ends, the sub block data creation process ends.

Note that while in the present example sub block data creation portion 205 is provided internal to data processing apparatus 200, sub block data creation portion 205 may be provided to server 110 described in the first example and sub block data may be created therein.

In that case the process flows as has been described in the first example. Furthermore, hardware or software that implements the function of sub block data creation portion 205 can be incorporated into a general-purpose personal computer (not shown) to convert content described in a general document description language to content having a data structure unique to the present invention. The content thus generated can be uploaded to server 110 of Fig. 1 and therefrom downloaded to a user's PC 115. This configuration can build a system creating and selling content which data processing apparatus 100 is caused to display. If data processing apparatus 100 is an electronic book viewer, such a system is effective in converting content of an electronic book described in a general-purpose document description language to a data structure dedicated to data processing apparatus 100 for provision.

Furthermore while the present example has been described partially by referring to a display device as an example, it is apparent from the above description that the present invention is characterized in that sub block data can be created and processed to allow hierarchically structured electronic data to be only partially read and processed. Accordingly, in the Fig. 9 block diagram, by replacing processing portion 206 with that unique to the processing apparatus of interest the present invention can be applied not only to a display device but also general data processing apparatuses.

### Third Example

The present invention in a third example will now be described.

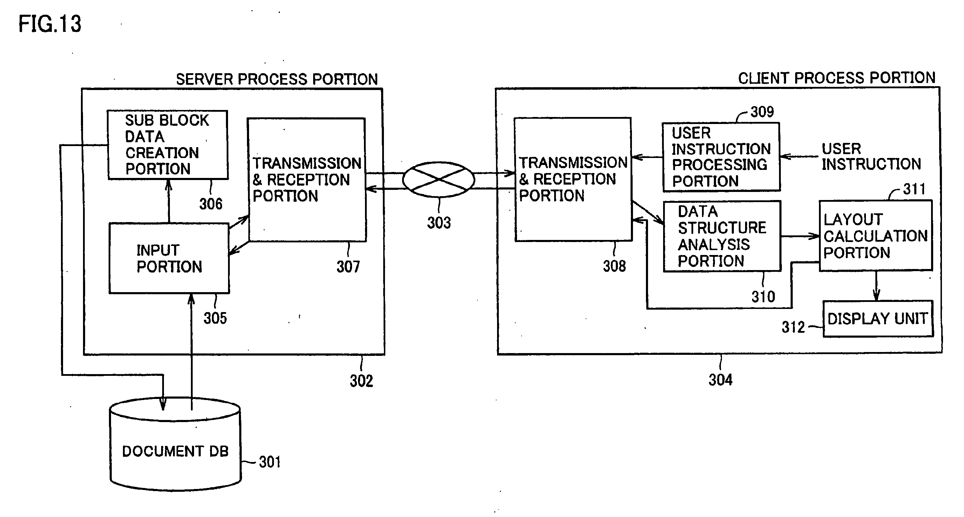

Fig. 13 is an exemplary block diagram of the data processing apparatus of the present invention in the third example. For the sake of illustration, it will be described as a data display device by way of example.

As shown in Fig. 13, the data display device is divided mainly into three portions, i.e., a document database (DB) 301, a server process portion 302 and a client process portion 304. Server process portion 302 and client process portion 304 are connected by a network line 303.

Document DB 301 has stored therein electronic data to be processed and accompanying sub block data.

Server process portion 302 is configured of an input portion 305 reading electronic data and sub block data from document DB 301, a sub block data creation portion 306 creating and recording sub block data to document DB 301 when there does not exist sub block data for electronic data, and a transmission and reception portion 307 receiving a request from client process portion 304 and also transmitting designated data to client process portion 304.

Client process portion 304 includes a user instruction processing portion 309 processing electronic data to be processed, user instructions such as scroll, and the like, a transmission and reception portion 308 transmitting to server process portion 302 content of user instruction that has been analyzed at user instruction processing portion 309, and also receiving data transmitted from server process portion 302, a data structure analysis portion 310 analyzing a hierarchical structure of electronic data transmitted from server process portion 302, a layout calculation portion 311 using the hierarchical structure analyzed at data structure analysis portion 310 to calculate a layout used to display the electronic data, and a display unit 312 using the calculated layout to display the data. Note that when layout calculation portion 311 calculates a layout and as a result determines a layout only for a portion of display unit 312, a request may be issued via transmission and reception portion 308 to server process portion 302 to transmit necessary data.

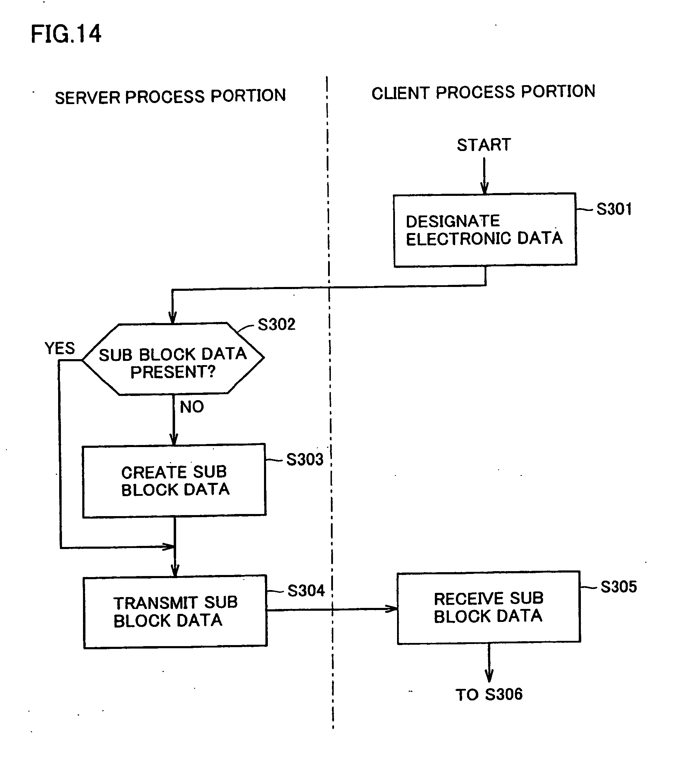

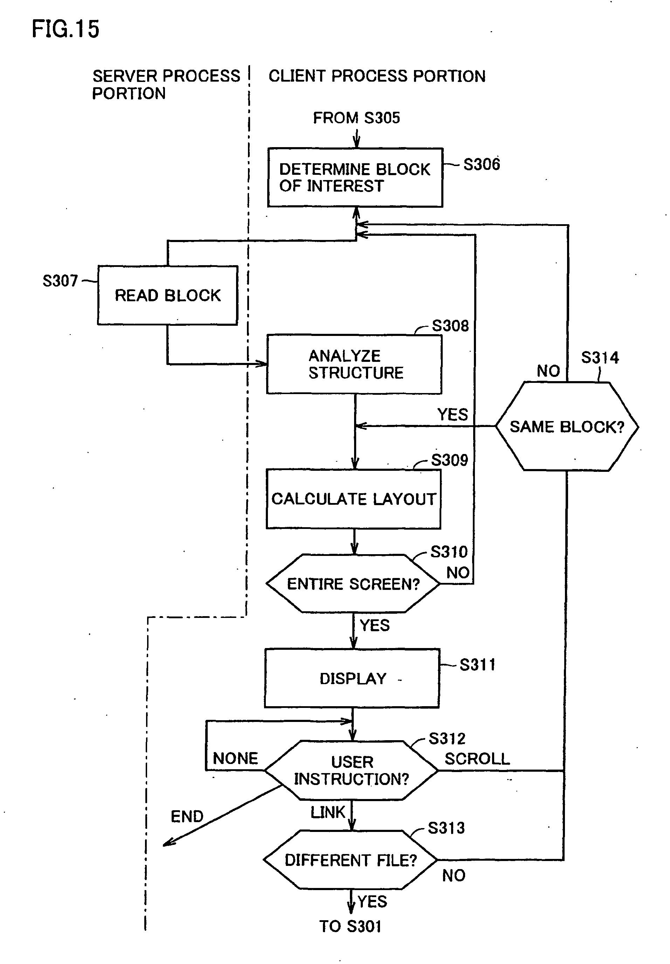

Reference will now be made to Figs. 14 and 15 to describe a flow of a process in the data display device of the present example.

With reference to Fig. 14, initially when a user designates electronic data to be processed the electronic data's file name is transmitted to server process portion 302 (S301). Server process portion 302 examines if sub block data for the electronic data exist within document DB 301 (S302) and if not the control proceeds with S303, creates sub block data, and proceeds with S304. S303 is similar to that having been described with reference to Fig. 11. If at S302 sub block data exists then the control proceeds with S304.

At S304 the sub block data is transmitted to and received by client process portion 304 (S305).

Note that of these steps, at S301 a target block size for division that is determined by the display unit 312 screen size, memory capacity and the like may be transmitted together with the electronic data's file name and server process portion 302 may be driven by the block size to create sub block data. This allows a block division corresponding to the processing capability of client process portion 304, which ultimately provides users with further convenience.

Then, with reference to Fig. 15, client process portion 304 analyzes the received sub block data and determines which block is to be read, as based on each block's start/end location and the location of an area to be displayed on a screen, as seen from the file's top, and informs server process portion 302 of a block to be read (S306).

Server process portion 302 having received the request reads the designated block from document DB 301 and returns it to client process portion 304 (S307). Client process portion 304 performs from the received block data and content of sub block data a process similar to that described previously at S105, and thereafter from S106 performs a process similar to that described previously at S105 (S309-S314).

Thus even if electronic data to be processed exists on a server, a hierarchical structure can be considered while electronic data can have only a portion read and processed so that a faster process can be provided and a smaller memory can be used than when electronic data is entirely read and processed. Furthermore, only partially processing electronic data contributes to a reduced amount of data communicated on a network.

Note that while in the present example sub block data creation portion 306 is provided internal to server process portion 302, sub block data creation portion 306 may be provided to document DB 301 or client process portion 304 to allow sub block data to be created in document DB 301 or client process portion 304.

Furthermore while in the above description a data display device has been exemplified, as is apparent from the above description, the present invention is characterized in that sub block data is used to perform a process to allow hierarchically structured electronic data to be only partially received and processed. Accordingly in the Fig. 13 block diagram by replacing layout calculation portion 311 and display unit 312 with a processing portion unique to the processing apparatus of interest the present invention can be applied not only to a display device but also general data processing apparatuses.

Furthermore the processes described in the first to third examples may partially or entirely be provided as an ordered row of instructions suitable for a process performed by a computer (i.e., a program). Furthermore, such programs can also be provided in the form of a computer readable recording medium having the program recorded therein for installing, executing and delivering the program.

Furthermore, the above program or content data having the data structure described in the first to third examples may be transmitted from a server apparatus via a network and thus provided to a client apparatus. In this case, the Fig. 1 server 110 includes a transmission portion transmitting the program or the content data.

The database processing apparatus in the present example that is configured as described above allows hierarchically structured electronic data to be only partially read and processed as sub block data prepared for the electronic data is used and the hierarchically structure is thus considered. A faster process can be provided and a smaller memory can be used than when the electronic data is entirely read and processed. Furthermore, preparing a link destination's positional information for the sub block data allows an XHMTL document's link function or a similar move to any block to be a fast move.

Furthermore in the second example the data processing apparatus is adapted to process electronic data free of sub block data after sub block data is created. Electronic data free of sub block data can also be processed rapidly and with a reduced amount of memory.

Furthermore in the present example the data processing apparatus can generate substantially equally sized blocks. As such, if a user enters a scroll instruction to move an indication to a preceding or subsequent block the indication is displayed in substantially the same processing time. This can advantageously prevent the user from feeling uncomfortable. If there exists a block having an extremely large size, some processing apparatuses may run short of working memory and fail to operate normally. Substantially equally sized blocks hardly provide such a problem.

Furthermore in the third example the data processing apparatus can read and process only a portion of electronic data when the electronic data and sub block data exist on a server connected via a network as the apparatus considers a hierarchical structure. A faster process can be provided and smaller memory can be used than when the electronic data is entirely downloaded from the server and processed.

Although the present invention has been described and illustrated in detail, it is clearly understood that the same is by way of illustration and example only and is not to be taken by way of limitation, the scope of the present invention being limited only by the terms of the appended claims.

### Industrial Applicability

Thus in accordance with the present invention hierarchically structured electronic data can be processed rapidly with reduced memory. The present invention is thus advantageously applicable to data processing methods, programs and apparatuses.

## Claims

1. Structured data comprising electronic data (101) used for causing a prescribed process to be performed in accordance with a definition of a document description language and sub block data (102) used for dividing said electronic data (101) into a plurality of blocks (10, 11, 12, 13) and causing said prescribed process to be performed for each said block (10, 11, 12, 13), said sub block data (102) includes positional information of each said block of electronic data (101), and hierarchical information of said block (10, 11, 12, 13) at a start location and an end location, said electronic data (101) and said sub block data (102) being paired; wherein
said hierarchical information includes a stack of control codes that are still active for a hierarchical level of a current position at the start location of the block and at the end location of the block (10, 11, 12, 13).

2. The structured data of claim 1, wherein said plurality of blocks (10, 11, 12, 13) are substantially equal in size.

3. The structured data of claim 1, wherein said sub block data (102) selects a location for division by said block (10, 11, 12, 13) at a front and a rear and in a vicinity of a control code having said electronic data's (101) structure recorded therein.

4. The structure data of claim 1, wherein said sub block data (102) limits said location of said division by said block (10, 11, 12, 13) to a location at a front and a rear of a control code with linefeed.

5. The structure data of claim 1, wherein when said electronic data (101) includes a link function allowing a jump within said electronic data (101) to any location, said sub block data (102) includes positional information of a destination of a jump effected by all link function in said electric data (101).

6. A transmission device comprising a transmission portion transmitting the structured data recited in claim 1.

## Patentansprüche

1. Strukturierte Daten, die elektronische Daten (101), die verwendet werden, um das Ausführen eines vorgeschriebenen Prozesses in Übereinstimmung mit einer Definition einer Dokumentbeschreibungssprache zu veranlassen, und Teilblockdaten (102), die verwendet werden, um die elektronischen Daten (101) in mehrere Blöcke (10, 11, 12, 13) zu unterteilen und um das Ausführen des vorgeschriebenen Prozesses für jeden Block (10, 11, 12, 13) zu veranlassen, enthalten, wobei die Teilblockdaten (102) Positionsinformationen jedes Blocks von elektronischen Daten (101) sowie hierarchische Informationen des Blocks (10, 11, 12, 13) an einer Startstelle und einer Endstelle enthalten, wobei die elektronischen Daten (101) und die Teilblockdaten (102) gepaart sind, wobei
die hierarchischen Informationen einen Stapel aus Steuercodes enthalten, die für eine hierarchische Ebene einer momentanen Position an der Startstelle des Blocks und an der Endstelle des Blocks (10, 11, 12, 13) noch aktiv sind.

2. Strukturierte Daten nach Anspruch 1, wobei die mehreren Blöcke (10, 11, 12, 13) im Wesentlichen die gleiche Gröfse haben.

3. Strukturierte Daten nach Anspruch 1, wobei die Teilblockdaten (102) eine Stelle zum Teilen durch den Block (10, 11, 12, 13) am vorderen und am hinteren Ende und in einer Umgebung eines Steuercodes, in dem die Struktur der elektronischen Daten (101) aufgezeichnet ist, wählen.

4. Strukturierte Daten nach Anspruch 1, wobei die Teilblockdaten (102) die Stelle zum Teilen durch den Block (10, 11, 12, 13) auf eine Stelle am vorderen und am hinteren Ende eines Steuercodes mit Zeilenvorschub einschränken.

5. Strukturierte Daten nach Anspruch 1, wobei dann, wenn die elektronischen Daten (101) eine Verknüpfungsfunktion enthalten, die einen Sprung in den elektronischen Daten (101) zu irgendeiner Stelle zulässt, die Teilblockdaten (102) Positionsinformationen eines Ziels eines Sprungs, der durch sämtliche Verknüpfungsfunktionen in den elektrischen Daten (101) bewirkt wird, enthalten.

6. Sendevorrichtung, die einen Sendeabschnitt enthält, um die strukturierten Daten nach Anspruch 1 zu senden.

## Revendications

1. Données structurées comportant des données électroniques (101) utilisées pour provoquer la mise en oeuvre d'un processus prescrit, conformément à un langage de description de document et des données de sous-bloc (102) utilisées pour diviser lesdites données électroniques (101) en plusieurs blocs (10, 11, 12, 13), et provoquant la mise en oeuvre dudit processus prescrit pour chacun desdits blocs (10, 11, 12, 13), lesdites données de sous-bloc (102) comprennent des informations de position de chacun desdits blocs de données électroniques (101), et des informations hiérarchiques dudit bloc (10, 11, 12, 13) au niveau d'une localisation de début et d'une localisation de fin, lesdites données électroniques (101) et lesdites données de sous-bloc (102) ; dans lesquelles
lesdites informations hiérarchiques incluent un ensemble de codes de commande, encore actif pour un niveau hiérarchique d'une position présente au niveau de la localisation de début du bloc et au niveau de la localisation de fin du bloc (10, 11, 12, 13).

2. Données structurées selon la revendication 1, dans lesquelles lesdits blocs (10, 11, 12, 13) sont sensiblement égaux en taille.

3. Données structurées selon la revendication 1, dans lequel lesdites données de sous-bloc (102) sélectionnent une localisation pour une division par ledit bloc (10, 11, 12, 13) en amont et en aval et au voisinage d'un code de commande contenant un enregistrement de structure de données électroniques (101).

4. Données structurées selon la revendication 1, dans lesquelles lesdites données de sous-bloc (102) limitent ladite localisation de ladite division par le bloc (10, 11, 12, 13) à une localisation en amont et en aval d'un code de commande avec saut de ligne.

5. Données structurées selon la revendication 1, dans lesquelles, lorsque lesdites données électroniques (101) comprennent une fonction de liaison permettant un saut, à l'intérieur desdites données électroniques (101), vers une localisation quelconque, lesdites données de sous-bloc (102) comprennent des informations de position d'une destination d'un saut effectué par toutes les fonctions de lien dans lesdites données électroniques (101).

6. Dispositif de transmission comportant une partie de transmission transmettant les données structurées décrites par la revendication 1.
